# EUROPÄISCHE PATENTSCHRIFT

(11) **EP 3 513 655 B1**
(45) Veröffentlichungstag und Bekanntmachung des Hinweises auf die Patenterteilung: **17.11.2021**
(21) Anmeldenummer: 19151015.5
(22) Anmeldetag: 09.01.2019
(51) Int. Cl.: A01N 31/02, A01N 25/06, A01N 25/30, A01P 1/00

(54) **ZUSAMMENSETZUNG ZUR DESINFEKTION VON HAUT UND/ODER HÄNDEN**
COMPOSITION FOR DISINFECTING SKIN AND/OR HANDS
COMPOSITION DESTINÉE À LA DÉSINFECTION DE LA PEAU ET / OU DES MAINS

(30) Priorität: 17.01.2018 DE 102018200732
(43) Veröffentlichungstag der Anmeldung: 24.07.2019
(73) Patentinhaber: B. Braun Melsungen AG, 34212 Melsungen (DE)
(72) Erfinder: Schumacher-Willi, Olga, 6207 Nottwil (CH); Henze, Heiko, 8052 Zürich (CH); Arndt, Andreas, 6010 Kriens (CH)
(74) Vertreter: Patentanwälte Ruff, Wilhelm, Beier, Dauster & Partner mbB

(56) Entgegenhaltungen:
- WO-A1-2006/138111
- WO-A1-2008/132621
- WO-A1-2014/084885
- WO-A2-2006/066888
- Anon.: "Evonik promotes silicone innovations", Personal Care Magazine, 4. September 2009 (2009-09-04), XP055557910, Gefunden im Internet: URL:https://www.personalcaremagazine.com/s tory/5492/evonik-promotes-silicone-innovat ions [gefunden am 2019-02-18]

## Beschreibung

### ANWENDUNGSGEBIET UND STAND DER TECHNIK

Die Erfindung betrifft eine Zusammensetzung zur Desinfektion von Haut und/oder Händen sowie die Verwendung der Zusammensetzung als Haut- und/oder Händedesinfektionsmittel.

Händedesinfektionsmittel stellen eine wirksame Maßnahme zur Infektionskontrolle dar. Die Anwendung solcher Produkte erfolgt nach einem standardisierten Einreibeverfahren, wie es unter anderem in der seit 1997 existierenden Europäischen Norm EN 1500 beschrieben ist. Flüssige Händedesinfektionsmittel sind häufig nur schwer zu handhaben. Da in der Regel ca. 3 ― 5 ml Lösung auf den Händen verteilt werden müssen, kommt es häufig vor, dass ein Teil der Flüssigkeit auf den Fussboden tropft, so dass eine unschöne Verschmutzung der Umgebung resultiert. Deswegen wurden unter anderem gelförmige und schäumende Desinfektionsmittel vorgeschlagen, welche besser zu dosieren sind. Die zur Erzielung einer ausreichenden Desinfektion in der Regel erforderlichen Alkohole wirken jedoch massiv entschäumend. Deshalb enthalten derartige Desinfektionsmittel häufig diverse Schäummittel oder Tenside.

Aus der EP 2 320 723 B1 ist eine nicht-aerosolische, schäumende antimikrobielle Zusammensetzung bekannt, welche ein lineares PEG-8 bis PEG-12-Dimeticon-Tensid als Schäummittel enthält.

Die WO 2015/061552 A1 offenbart eine schäumende, alkoholische Zusammensetzung, welche ein Tensid aus einem Polyether und Polydimethylsiloxan enthält.

Gegenstand der WO 2006/066888 A2 sowie US 2014/0221502 A1 ist jeweils eine alkoholische Schaumzusammensetzung zur Desinfektion, welche ein Tensid sowie ein Polyalkylenglykol sowie gegebenenfalls einen Schaumstabilisator enthält.

Aus der WO 2006/138111 A1 ist ebenfalls eine schäumende Zusammensetzung bekannt. Neben einem Alkohol enthält die Zusammensetzung ein Tensid sowie einen Schaumstabilisator.

Die US 2015/0297728 A1 offenbart ein Verfahren zum Stabilisieren von alkoholischen Händedesinfektionsmitteln.

Gegenstand der US 8,697,103 B2 ist eine alkoholische, schäumende Zusammensetzung, welche ein Silikon-Tensid sowie wenigstens ein Polyalkylenglykol enthält.

Aus der US 7,651,990 B2 ist eine nicht-aerosolische, schäumende Zusammensetzung bekannt, welche einen Alkohol, ein Polydimethylsiloxan-Tensid sowie einen polymeren Schaumbildner enthält.

Die WO 2006/066888 A2 offenbart eine alkoholische Schaumzusammensetzung zur Desinfektion von Haut und Händen, welche Ethanol, Polyethylenglycol-14M sowie ein Dimethiconderivat enthält.

Aus der WO 2008/132621 A1 sowie WO 2006/138111 A1 sind jeweils schäumbare Desinfektionsmittelzusammensetzungen auf Alkoholbasis bekannt, welche Silicone Quaternium-8 bzw. Silicone Quaternium-1 und -2 enthalten.

Ferner ist die Verwendung von Silicone Quaternium-22 als Konditioniermittel in kosmetischen Zusammensetzungen bekannt (Anon.: "Evonik Promotes Silicone Innovations, Personal Care Magazine, 4. Sept. 2009).

Aus der WO 2014/084885 A1 sind schaumstabilisierende Zusammensetzungen mit einem ethoxylierten Polyethyleniminpolymer bekannt.

Problematisch bei aus dem Stand der Technik bekannten Händedesinfektionsmitteln ist, dass die dort zum Einsatz kommenden Tenside oft zu unangenehmen Klebeeffekten auf den Händen führen und insbesondere bei Dauergebrauch Hautunverträglichkeiten auftreten können.

### AUFGABE UND LÖSUNG

Aufgabe der Erfindung ist es daher, eine Zusammensetzung zur Desinfektion bereitzustellen, welche im Zusammenhang mit gattungsgemäßen Händedesinfektionsmitteln bekannte Nachteile wenigstens weitgehend vermeidet und sich insbesondere durch eine reduzierte Klebrigkeit auf Haut und/oder Händen sowie insbesondere durch ein verbessertes Rückstandsverhalten auszeichnet.

Diese Aufgabe wird gelöst durch eine Zusammensetzung gemäß unabhängigem Anspruch 1. Bevorzugte Ausgestaltungen der Zusammensetzung sind in den abhängigen Ansprüchen sowie in der Beschreibung definiert. Der Wortlaut sämtlicher Ansprüche wird hiermit durch ausdrückliche Bezugnahme zum Inhalt der vorliegenden Beschreibung gemacht.

Bei der erfindungsgemäßen Zusammensetzung handelt es sich um eine Zusammensetzung zur Desinfektion, insbesondere von Haut und/oder Händen, bevorzugt von Händen.

Die Zusammensetzung enthält Folgendes:
- einen Alkohol oder eine Mischung von Alkoholen,
- eine Silikonverbindung mit quartären Ammoniumgruppen,
- ein Polyethylenoxid und
- ein Polyethylenimin.

Unter dem Ausdruck "Silikonverbindung mit quartären Ammoniumgruppen" soll im Sinne der vorliegenden Erfindung ein Polymer verstanden werden, welches ein Silikongerüst und quartäre Ammoniumgruppen sowie optional ein weiteres Polymergerüst, wie beispielsweise ein Polyethergerüst, aufweist. Unter dem Ausdruck "Silikongerüst" soll im Sinne der vorliegenden Erfindung ein Polymergerüst verstanden werden, bei welchem Siliziumatome über Sauerstoffatome, insbesondere ketten- und/oder netzartig, verknüpft und die restlichen Valenzen des Siliziums durch Kohlenwasserstoffreste, insbesondere ausgewählt aus der Gruppe bestehend aus Methylreste, Ethylreste, Propylreste, Phenylreste und Kombinationen aus wenigstens zwei der genannten Kohlenwasserstoffreste, abgesättigt sind. Unter dem Ausdruck "quartäre Ammoniumgruppen" sollen im Sinne der vorliegenden Erfindung Ammoniumgruppen verstanden werden, bei welchen jeweils alle vier Valenzen des Stickstoffatoms organisch gebunden, d. h. über einen organischen Rest, wie beispielsweise organischen Kohlenwasserstoffrest, abgesättigt sind. Aufgrund der positiven Ladungen an den quartären Ammoniumgruppen weist die Silikonverbindung mit quartären Ammoniumgruppen weiterhin gleiche oder verschiedene Gegenionen zu den positiv geladenen quartären Ammoniumgruppen auf. Die Gegenionen können dabei anorganische oder organische Anionen von Säuren, beispielsweise Acetat-Ionen, sein.

Die Silikonverbindung mit quartären Ammoniumgruppen kann im Sinne der vorliegenden Erfindung auch als quartäres Silikonpolymer bezeichnet werden. Abhängig von der Anzahl der quartären Ammoniumgruppen kann es sich bei der Silikonverbindung mit quartären Ammoniumgruppen beispielsweise um ein diquartäres oder triquartäres Silikonpolymer handeln.

Unter dem Ausdruck "Polyethylenoxid" soll im Sinne der vorliegenden Erfindung ein linear aufgebautes Polymer mit der sich wiederholenden Struktureinheit [-CH₂-CH₂-O-] und mit einer mittleren molaren Masse (mittlere Molmasse) von ≥ 35.000 (gesprochen: größer oder gleich fünfunddreißigtausend) g/mol, insbesondere > 35.000 (gesprochen: größer fünfunddreißigtausend) g/mol, verstanden werden.

Überraschender Weise stellte sich heraus, dass mittels einer Kombination von Polyethylenoxid und einem Polyethylenimin in Gegenwart einer Silikonverbindung mit quartären Ammoniumgruppen sowie eines Alkohol oder einer Alkoholmischung ein Haut- und/oder Händedesinfektionsmittel, bevorzugt Händedesinfektionsmittel, hergestellt werden kann, welches sich unter Entstehung eines vorzugsweise stabilen Schaums schäumen lässt. Die erfindungsgemäße Zusammensetzung kann daher auch als schäumendes Haut- und/oder Händedesinfektionsmittel, bevorzugt schäumendes Händedesinfektionsmittel, bezeichnet werden. Dabei wirken das in der Zusammensetzung enthaltene Polyethylenoxid mit besonderem Vorteil als Schaumverstärker ("Schaumbooster"), das Polyethylenimin als Schaumstabilisator, die Silikonverbindung als Tensid und der Alkohol oder die Mischung von Alkoholen vorzugsweise als mikrobizider Wirkstoff oder mikrobizide Wirkstoffmischung.

Gegenüber gattungsgemäßen Desinfektionsmitteln zeichnet sich die erfindungsgemäße Zusammensetzung insbesondere durch eine reduzierte Klebwirkung, eine verbesserte Hautverträglichkeit sowie durch ein verbessertes Rückstandsverhalten aus.

Ein weiterer Vorteil besteht darin, dass der mittels der erfindungsgemäßen Zusammensetzung erzeugbare Schaum über einen längeren Zeitraum stabil bleibt, als dies bei gattungsgemäßen Desinfektionsmitteln der Fall ist, ohne dass hierfür mehr Schaum benötigt wird.

Ein weiterer Vorteil besteht schließlich darin, dass für die Schäumung der erfindungsgemäßen Zusammensetzung kein Einsatz von Treibmitteln oder Treibgasen erforderlich ist. Dies führt zu einer wesentlichen Vereinfachung in der Handhabung der erfindungsgemäßen Zusammensetzung und verbessert zudem deren Umweltverträglichkeit. Die erfindungsgemäße Zusammensetzung ist daher vorzugsweise frei von Treibmitteln oder Treibgasen.

In Ausgestaltung der Erfindung handelt es sich bei dem Alkohol oder der Mischung von Alkoholen um einen Alkohol oder eine Mischung von Alkoholen der allgemeinen Formel

R-OH,

wobei R einen aliphatischen linearen Kohlenwasserstoffrest oder aliphatischen verzweigten Kohlenwasserstoffrest mit 1 bis 8 Kohlenstoffatomen, insbesondere 1 bis 6 Kohlenstoffatomen, bedeutet.

Der Alkohol oder die Mischung von Alkoholen kann insbesondere ausgewählt sein aus der Gruppe bestehend aus Ethanol, 1-Propanol, 2-Propanol, 1-Butanol, Isobutylalkohol, tertiärer Butylalkohol, 1-Pentanol, 2-Pentanol, 3-Pentanol, Neopentylalkohol, 1-Hexanol, 1-Octanol, 2-Octanol und Mischungen von wenigstens zwei der genannten Alkohole.

In weiterer Ausgestaltung der Erfindung ist der Alkohol oder die Mischung von Alkoholen ausgewählt aus der Gruppe bestehend aus Ethanol, 1-Propanol, 2-Propanol und Mischungen von wenigstens zwei der genannten Alkohole. Bevorzugt handelt es sich bei der Mischung von Alkoholen um eine Mischung von Ethanol und 1-Propanol oder um eine Mischung von Ethanol und 2-Propanol. Mit anderen Worten ist es erfindungsgemäß bevorzugt, wenn die Zusammensetzung eine Mischung von Ethanol und 1-Propanol oder eine Mischung von Ethanol und 2-Propanol aufweist. Die Alkohole Ethanol, 1-Propanol sowie 2-Propanol haben neben ihren mikrobiziden Eigenschaften den Vorteil, dass sie im Vergleich zu anderen Alkoholen vergleichsweise hautverträglicher sind.

In weiterer Ausgestaltung der Erfindung weist der Alkohol oder die Mischung von Alkoholen einen Anteil von 60 Gew.-% bis 90 Gew.-%, insbesondere 70 Gew.-% bis 90 Gew.-%, vorzugsweise 75 Gew.-% bis 90 Gew.-%, auf, bezogen auf das Gesamtgewicht der Zusammensetzung. Die mikrobiziden Eigenschaften der erfindungsgemäßen Zusammensetzung kommen insbesondere bei den in diesem Absatz offenbarten Alkoholanteilen besonders stark zur Geltung.

Vorzugsweise weist die Zusammensetzung einen Anteil an Ethanol von 45 Gew.-% bis 60 Gew.-%, insbesondere 50 Gew.-% bis 60 Gew.-%, vorzugsweise 55 Gew.-% bis 60 Gew.-%, auf, bezogen auf das Gesamtgewicht der Zusammensetzung.

Alternativ oder in Kombination ist es bevorzugt, wenn die Zusammensetzung einen Anteil an 1-Propanol und/oder 2-Propanol von 15 Gew.-% bis 30 Gew.-%, insbesondere 20 Gew.-% bis 30 Gew.-%, vorzugsweise 20 Gew.-% bis 25 Gew.-%, aufweist, bezogen auf das Gesamtgewicht der Zusammensetzung.

In weiterer Ausgestaltung der Erfindung handelt es sich bei der Silikonverbindung mit quartären Ammoniumgruppen um eine Silikonverbindung mit zwei endständigen, quartären Ammoniumgruppen. Vorzugsweise besitzt die Silikonverbindung die nachfolgende allgemeine Formel (I):

[RN⁺Me₂-A-(SiMe₂O)ₙ-SiMe₂-A-N⁺Me₂R]2CH₃COO⁻ (Formel I)

wobei A die Gruppe -(CH₂)₃-O-CH₂-CH(OH)-CH₂- ist, R ein Alkylrest mit mindestens 8 Kohlenstoffatomen und n eine ganze Zahl von 10 bis 120 ist.

Insbesondere kann es sich bei der Silikonverbindung mit quartären Ammoniumgruppen um Silikonpolymere mit zwei endständigen, quartären Ammoniumgruppen handeln, welche unter der INCI-Bezeichnung Quaternium-80 bekannt sind. Hierbei handelt es sich um Dimethylsiloxane mit zwei endständigen Trialkylammoniumgruppen. Derartige diquatäre Polydimethylsiloxane werden beispielsweise von der Firma Evonik unter den Handelsnahmen Abil® Quat 3270, Abil® Quat 3272, Abil® Quat 3474, Abil® Quat T60 sowie Abil® ME 45 vertrieben.

In weiterer Ausgestaltung der Erfindung handelt es sich bei der Silikonverbindung mit quartären Ammoniumgruppen um eine Silikonverbindung mit mindestens drei endständigen, quartären Ammoniumgruppen. Bevorzugt weist die Silikonverbindung in diesem Fall eine T-förmige Struktur auf.

In weiterer Ausgestaltung der Erfindung ist die Silikonverbindung mit quaternären Ammoniumgruppen ausgewählt aus der Gruppe bestehend aus Silicone Quaternium-1, Silicone Quaternium-2, Silicone Quaternium-3, Silicone Quaternium-4, Silicone Quaternium-5, Silicone Quaternium-6, Silicone Quaternium-7, Silicone Quaternium-8, Silicone Quaternium-9, Silicone Quaternium-10, Silicone Quaternium-11, Silicone Quaternium-12, Silicone Quaternium-15, Silicone Quaternium-16, Silicone Quaternium-17, Silicone Quaternium-18, Silicone Quaternium-20, Silicone Quaternium-21, Silicone Quaternium-22, Silicone Quaternium-2 Panthenol Succinate, Silicone Quaternium-16/Glycidyl Dimethicone Crosspolymer, Quaternium-80 und Mischungen von wenigstens zwei der genannten Silikonverbindungen mit quartären Ammoniumgruppen.

Die im vorherigen Absatz genannten Silikonverbindungen mit quartären Ammoniumgruppen sind gemäß ihren sogenannten INCI-Bezeichnungen (International Nomenclature of Cosmetic Ingredients) gekennzeichnet. Dabei bedeutet der Ausdruck "Quaternium", dass die Silikonverbidnung quartäre Ammoniumgruppen aufweist.

Besonders bevorzugt handelt es sich bei der Silikonverbindung mit quartären Ammoniumgruppen um Silicone Quaternium-22. Diese Silikonverbindung wird beispielsweise von der Firma Evonik unter der Handelsbezeichnung Abil® T-Quat 60 kommerziell vertrieben. Silicone Quaternium-22 hat den Vorteil, dass es über ein Laktat-Gegenion verfügt, welches eine geringere Geruchsbelästigung als Acetate aufweist.

In weiterer Ausgestaltung der Erfindung weist die Silikonverbindung mit quartären Ammoniumgruppen einen Anteil von 0,1 Gew.-% bis 1 Gew.-%, insbesondere 0,3 Gew.-% bis 0,9 Gew.-%, vorzugsweise 0,4 Gew.-% bis 0,8 Gew.-%, auf, bezogen auf das Gesamtgewicht der Zusammensetzung. Aufgrund der erfindungsgemäß vorgesehenen Kombination von Polyethylenoxid (als Schaumbooster) und Polyethylenimin (als Schaumstabilisator) können mit besonderem Vorteil bereits geringe Mengen der Silikonverbindung ausreichend sein, um einen nach Schäumung der erfindungsgemäßen Zusammensetzung stabilen Schaum zu erhalten.

In weiterer Ausgestaltung der Erfindung weist das Polyethylenoxid eine mittlere molare Masse (mittlere Molmasse), insbesondere gewichtsmittlere molare Masse (gewichtsmittlere Molmasse), von 100.000 (gesprochen: einhunderttausend) g/mol bis 10.000.000 (gesprochen: zehn Millionen) g/mol, insbesondere 200.000 (gesprochen: zweihunderttausend) g/mol bis 4.000.000 (gesprochen: vier Millionen) g/mol, auf. Die mittlere, insbesondere gewichtsmittlere, molare Masse kann beispielsweise mittels Gelpermeationschromatographie (GPC) oder mittels GPC-LS, d. h. mittels Gelpermeationschromatographie (GPC), gekoppelt mit Messung durch Lichtstreuung (LS), insbesondere gemäß DIN EN ISO 16014-5:2012-10 oder EN ISO 16014-5:2012, bestimmt werden.

In weiterer Ausgestaltung der Erfindung ist das Polyethylenoxid ausgewählt aus der Gruppe bestehend aus PEG-2M, PEG-5M, PEG-7M, PEG-9M, PEG-14M, PEG-20M, PEG-23M, PEG-25M, PEG-45M, PEG-65M, PEG-90M, PEG-115M, PEG-160M, PEG-180M und Mischungen von wenigstens zwei der genannten Polyethylenoxide.

Die im vorherigen Absatz genannten Polyethylenoxide sind gemäß ihren sogenannten INCI-Bezeichnungen (International Nomenclature of Cosmetic Ingredients) gekennzeichnet. Dabei gibt die Zahl hinter "PEG-" die durchschnittliche Anzahl der Struktureinheiten -CH₂-CH₂-O- pro Polyethylenoxidmolekül an, wobei M 1.000 (gesprochen: tausend) bedeutet.

Demnach bedeutet eine Verbindung mit der INCI-Bezeichnung "PEG-2M" ein Polyethylenoxid mit einer durchschnittlichen Anzahl von 2.000 (gesprochen: zweitausend) Struktureinheiten -CH₂-CH₂-O- pro Molekül.

Eine Verbindung mit der INCI-Bezeichnung "PEG-5M" bedeutet ein Polyethylenoxid mit einer durchschnittlichen Anzahl von 5.000 (gesprochen: fünftausend) Struktureinheiten -CH₂-CH₂-O-pro Molekül.

Eine Verbindung mit der INCI-Bezeichnung "PEG-7M" bedeutet ein Polyethylenoxid mit einer durchschnittlichen Anzahl von 7.000 (gesprochen: siebentausend) Struktureinheiten -CH₂-CH₂-O- pro Molekül.

Eine Verbindung mit der INCI-Bezeichnung "PEG-9M" bedeutet ein Polyethylenoxid mit einer durchschnittlichen Anzahl von 9.000 (gesprochen: neuntausend) Struktureinheiten -CH₂-CH₂-O-pro Molekül.

Eine Verbindung mit der INCI-Bezeichnung "PEG-14M" bedeutet ein Polyethylenoxid mit einer durchschnittlichen Anzahl von 14.000 (gesprochen: vierzehntausend) Struktureinheiten -CH₂-CH₂-O- pro Molekül.

Eine Verbindung mit der INCI-Bezeichnung "PEG-20M" bedeutet ein Polyethylenoxid mit einer durchschnittlichen Anzahl von 20.000 (gesprochen: zwanzigtausend) Struktureinheiten -CH₂-CH₂-O- pro Molekül.

Eine Verbindung mit der INCI-Bezeichnung "PEG-23M" bedeutet ein Polyethylenoxid mit einer durchschnittlichen Anzahl von 23.000 (gesprochen: dreiundzwanzigtausend) Struktureinheiten -CH₂-CH₂-O- pro Molekül.

Eine Verbindung mit der INCI-Bezeichnung "PEG-25M" bedeutet ein Polyethylenoxid mit einer durchschnittlichen Anzahl von 25.000 (gesprochen: fünfundzwanzigtausend) Struktureinheiten -CH₂-CH₂-O- pro Molekül.

Eine Verbindung mit der INCI-Bezeichnung "PEG-45M" bedeutet ein Polyethylenoxid mit einer durchschnittlichen Anzahl von 45.000 (gesprochen: fünfundvierzigtausend) Struktureinheiten -CH₂-CH₂-O- pro Molekül.

Eine Verbindung mit der INCI-Bezeichnung "PEG-65M" bedeutet ein Polyethylenoxid mit einer durchschnittlichen Anzahl von 65.000 (gesprochen: fünfundsechzigtausend) Struktureinheiten -CH₂-CH₂-O- pro Molekül.

Eine Verbindung mit der INCI-Bezeichnung "PEG-90M" bedeutet ein Polyethylenoxid mit einer durchschnittlichen Anzahl von 90.000 (neunzigtausend) Struktureinheiten -CH₂-CH₂-O- pro Molekül.

Eine Verbindung mit der INCI-Bezeichnung "PEG-115M" bedeutet ein Polyethylenoxid mit einer durchschnittlichen Anzahl von 115.000 (gesprochen: einhundertfünfzehntausend) Struktureinheiten -CH₂-CH₂-O- pro Molekül.

Eine Verbindung mit der INCI-Bezeichnung "PEG-160M" bedeutet ein Polyethylenoxid mit einer durchschnittlichen Anzahl von 160.000 (gesprochen: einhundertsechzigtausend) Struktureinheiten -CH₂-CH₂-O- pro Molekül.

Eine Verbindung mit der INCI-Bezeichnung "PEG-180M" bedeutet ein Polyethylenoxid mit einer durchschnittlichen Anzahl von 180.000 (gesprochen: einhundertachtzigtausend) Struktureinheiten -CH₂-CH₂-O- pro Molekül.

Vorzugsweise handelt es sich bei dem Polyethylenoxid um PEG-23M. PEG-23M hat den Vorteil, dass es sich durch eine geringere Klebwirkung als größere Polyethylenoxide auszeichnet. Dadurch kann beispielsweise dem Risiko einer Verklebung eines beim Austrag der erfindungsgemäßen Zusammensetzung verwendeten Schaumkopfes besonders wirkungsvoll begegnet werden.

In weiterer Ausgestaltung der Erfindung weist das Polyethylenoxid einen Anteil von 0,005 Gew.-% bis 0,5 Gew.-%, insbesondere 0,008 Gew.-% bis 0,1 Gew.-%, vorzugsweise 0,009 Gew.-% bis 0,05 Gew.-%, auf, bezogen auf das Gesamtgewicht der Zusammensetzung.

In weiterer Ausgestaltung der Erfindung handelt es sich bei dem Polyethylenimin um ein lineares, d.h. unverzweigtes, Polyethylenimin.

In einer alternativen Ausgestaltung der Erfindung handelt es sich bei dem Polyethylenimin um ein verzweigtes Polyethylenimin.

In weiterer Ausgestaltung der Erfindung weist das Polyethylenimin eine mittlere molare Masse (mittlere Molmasse), insbesondere gewichtsmittlere molare Masse (gewichtsmittlere Molmasse), von 800 (gesprochen: achthundert) g/mol bis 2.000.000 (gesprochen: zwei Millionen) g/mol, insbesondere 800 (gesprochen: achthundert) g/mol bis 750.000 (gesprochen: siebenhundertfünfzigtausend) g/mol, auf. Die mittlere, insbesondere gewichtsmittlere, molare Masse kann beispielsweise mittels Gelpermeationschromatographie (GPC) oder mittels GPC-LS, d. h. mittels Gelpermeationschromatographie (GPC), gekoppelt mit Messung durch Lichtstreuung (LS), insbesondere gemäß DIN EN ISO 16014-5:2012-10 oder EN ISO 16014-5:2012, bestimmt werden.

Weiterhin kann es sich bei dem Polyethylenimin um ein Polyethylenimin mit primären Amino-Gruppen und/oder sekundären Amino-Gruppen und/oder tertiären Amino-Gruppen handeln.

Insbesondere kann es sich bei dem Polyethylenimin um ein verzweigtes Polyethylenimin mit primären, sekundären und tertiären Aminogruppen, insbesondere in Anteilen primäre Aminogruppen : sekundäre Aminogruppen : tertiäre Aminogruppen von 3:4:3, handeln.

Bei dem Polyethylenimin kann es sich weiterhin insbesondere um ein Polyethylenimin handeln, welches unter der Bezeichnung Lupasol FG kommerziell erhältlich ist. Ein derartiges Polyethylenimin weist eine mittlere Molmasse von 800 g/mol, eine Viskosität von 5.000 mPas (ISO 2555, Brookfield), eine Konzentration von 99 % (ISO 3251), einen Wasseranteil von 1 % (DIN 53715, K. Fischer), einen Brechungsindex von 1,523 (DIN 51432, 20 °C), einen pH-Wert von 11 (DIN 19268, 1 % Trockensubstanz in dest. Wasser), eine Dichte von 1,03 g/cm³ (DIN 51757, 20 °C), eine Ladungsdichte (kationisch) von 16 meq/g TS, einen Anteil an monomerem Ethylenimin <1 ppm, einen Pourpoint von -18 °C (ISO 3016) sowie einen Anteil von primären Amino-gruppen/sekundären Aminogruppen/tertiären Aminogruppen (¹³C-NMR) von 1/0,9/0,5 auf.

Weiterhin kann es sich bei dem Polyethylenimin um ein Polyethylenimin handeln, welches unter der Bezeichnung Lupasol G 20 wfr (waterfree) kommerziell erhältlich ist. Ein derartiges Polyethylenimin weist eine mittlere Molmasse von 1.300 g/mol (GPC), eine Viskosität von 8.000 mPas (ISO 2555, Brookfield), eine Konzentration von 99 % (ISO 3251), einen Wasseranteil von 1 % (DIN 53715, K. Fischer), einen Brechungsindex von 1,526 (DIN 51423, 20 °C), einen pH-Wert von 11 (DIN 19268, 1 % Trockensubstanz in dest. Wasser), eine Dichte von 1,03 g/cm³ (DIN 51757, 20 °C), eine (kationische) Ladungsdichte von 16 meq/g TS, einen Anteil an monomerem Ethyl-enimin <1 ppm, einen Pourpoint von -16 °C (ISO 3016) sowie einen Anteil von primären Amino-gruppen/sekundären Aminogruppen/tertiären Aminogruppen (¹³C-NMR) von 1/0,9/0,6 auf.

Weiterhin kann es sich bei dem Polyethylenimin um ein Polyethylenimin handeln, welches unter der Bezeichnung Lupasol PR 8515 kommerziell erhältlich ist. Ein solches Polyethylenimin weist eine mittlere Molmasse von 2.000 g/mol (GPC), eine Viskosität von 14.000 mPas (ISO 2555, Brookfield), eine Konzentration von 99 % (ISO 3251), einen Wasseranteil von 1 % (DIN 53715, K. Fischer), einen Brechungsindex von 1,527 (DIN 51423, 20 °C), einen pH-Wert von 11 (DIN 19268, 1 % Trockensubstanz in dest. Wasser), eine Dichte von 1,05 g/cm³ (DIN 51757, 20 °C), eine (kationische) Ladungsdichte von 16 meq/g TS, einen Anteil an monomerem Ethylenimin < 1 ppm, einen Pourpoint von -9 °C (ISO 3016) sowie einen Anteil von primären Aminogruppen/sekundären Aminogruppen/tertiären Aminogruppen (¹³C-NMR) von 1/0,9/0,6 auf.

Weiterhin kann es sich bei dem Polyethylenimin um ein Polyethylenimin handeln, welches unter der Bezeichnung Lupasol WF kommerziell erhältlich ist. Ein solches Polyethylenimin weist eine mittlere Molmasse von 25.000 g/mol (GPC), eine Viskosität > 200.000 mPas (ISO 2555, Brookfield), eine Konzentration von 99 % (ISO 3251), einen Wasseranteil von 1 % (DIN 53715, K. Fischer), einen Brechungsindex von 1,530 (DIN 51423, 20 °C), einen pH-Wert von 11 (DIN 19268, 1 % Trockensubstanz in dest. Wasser), eine Dichte von 1,10 g/cm³ (DIN 51757, 20 °C), eine (kationische) Ladungsdichte von 17 meq/g TS, einen Anteil an monomerem Ethylenimin <1 ppm, einen Pourpoint von -3 °C (ISO 3016) sowie einen Anteil von primären Amino-gruppen/sekundären Aminogruppen/tertiären Aminogruppen (¹³C-NMR) von 1/1,1/0,7 auf.

Weiterhin kann es sich bei dem Polyethylenimin um ein Polyethylenimin handeln, welches unter der Bezeichnung Lupasol G 20 kommerziell erhältlich ist. Ein solches Polyethylenimin weist eine mittlere Molmasse von 1.300 g/mol (GPC), eine Viskosität von 400 mPas (ISO 2555, Brookfield), eine Konzentration von 50 % (ISO 3251), einen Wasseranteil von 50 % (DIN 53715, K. Fischer), einen Brechungsindex von 1,451 (DIN 51423, 20 °C), einen pH-Wert von 11 (DIN 19268, 1 % Trockensubstanz in dest. Wasser), eine Dichte von 1,08 g/cm³ (DIN 51757, 20 °C), eine (kationische) Ladungsdichte von 16 meq/g TS, einen Anteil an monomerem Ethylenimin <1 ppm, einen Pourpoint von -24 °C (ISO 3016) sowie einen Anteil von primären Amino-gruppen/sekundären Aminogruppen/tertiären Aminogruppen (¹³C-NMR) von 1/0,9/0,6 auf.

Weiterhin kann es sich bei dem Polyethylenimin um ein Polyethylenimin handeln, welches unter der Bezeichnung Lupasol G 35 kommerziell erhältlich ist. Ein solches Polyethylenimin weist eine mittlere Molmasse von 2.000 g/mol (GPC), eine Viskosität von 600 mPas (ISO 2555, Brookfield), eine Konzentration von 50 % (ISO 3251), einen Wasseranteil von 50 % (DIN 53715, K. Fischer), einen Brechungsindex von 1,450 (DIN 51423, 20 °C), einen pH-Wert von 11 (DIN 19268, 1 % Trockensubstanz in dest. Wasser), eine Dichte von 1,08 g/cm³ (DIN 51757, 20 °C), eine (kationische) Ladungsdichte von 16 meq/g TS, einen Anteil an monomerem Ethylenimin <1 ppm, einen Pourpoint von -18 °C (ISO 3016) sowie ein Verhältnis von primären Aminogruppen/sekundären Aminogruppen/tertiären Aminogruppen (¹³C-NMR) von 1/1/0,6 auf.

Weiterhin kann es sich bei dem Polyethylenimin um ein Polyethylenimin handeln, welches unter der Bezeichnung Lupasol G 100 kommerziell erhältlich ist. Ein solches Polyethylenimin weist eine mittlere Molmasse von 5.000 g/mol (GPC), eine Viskosität von 1.100 mPas (ISO 2555, Brookfield), eine Konzentration von 50 % (ISO 3251), einen Wasseranteil von 50 % (DIN 53715, K. Fischer), einen Brechungsindex von 1,450 (DIN 51423, 20 °C), einen pH-Wert von 11 (DIN 19268, 1 % Trockensubstanz in dest. Wasser), eine Dichte von 1,08 g/cm³ (DIN 51757, 20 °C), eine (kationische) Ladungsdichte von 16 meq/g TS, einen Anteil an monomerem Ethylenimin <1 ppm, einen Pourpoint von -18 °C (ISO 3016) sowie ein Verhältnis von primären Aminogruppen/sekundären Aminogruppen/tertiären Aminogruppen (¹³C-NMR) von 1/1/0,7 auf.

Weiterhin kann es sich bei dem Polyethylenimin um ein Polyethylenimin handeln, welches unter der Bezeichnung Lupasol HF kommerziell erhältlich ist. Ein solches Polyethylenimin weist eine mittlere Molmasse von 25.000 g/mol (GPC), eine Viskosität von 11.000 mPas (ISO 2555, Brookfield), eine Konzentration von 56 % (ISO 3251), einen Wasseranteil von 44 % (DIN 53715, K. Fischer), einen Brechungsindex von 1,464 (DIN 51423, 20 °C), einen pH-Wert von 11 (DIN 19268, 1 % Trockensubstanz in dest. Wasser), eine Dichte von 1,08 g/cm³ (DIN 51757, 20 °C), eine (kationische) Ladungsdichte von 17 meq/g TS, einen Anteil an monomerem Ethylenimin <1 ppm, einen Pourpoint von -20 °C (ISO 3016) sowie ein Verhältnis von primären Aminogruppen/sekundären Aminogruppen/tertiären Aminogruppen (¹³C-NMR) von 1/1,1/0,7 auf.

Weiterhin kann es sich bei dem Polyethylenimin um ein Polyethylenimin handeln, welches unter der Bezeichnung Lupasol P kommerziell erhältlich ist. Ein solches Polyethylenimin weist eine mittlere Molmasse von 750.000 g/mol (GPC), eine Viskosität von 25.000 mPas (ISO 2555, Brookfield), eine Konzentration von 50 % (ISO 3251), einen Wasseranteil von 50 % (DIN 53715, K. Fischer), einen Brechungsindex von 1,452 (DIN 51423, 20 °C), einen pH-Wert von 11 (DIN 19268, 1 % Trockensubstanz in dest. Wasser), eine Dichte von 1,09 g/cm³ (DIN 51757, 20 °C), eine (kationische) Ladungsdichte von 17 meq/g TS, einen Anteil an monomerem Ethylenimin <1 ppm, einen Pourpoint von -3 °C (ISO 3016) sowie ein Verhältnis von primären Aminogruppen/sekundären Aminogruppen/tertiären Aminogruppen (¹³C-NMR) von 1/1/0,7 auf.

Weiterhin kann es sich bei dem Polyethylenimin um ein Polyethylenimin handeln, welches unter der Bezeichnung Lupasol PS kommerziell erhältlich ist. Ein solches Polyethylenimin weist eine mittlere Molmasse von 750.000 g/mol (GPC), eine Viskosität von 1.700 mPas (ISO 2555, Brookfield), eine Konzentration von 33 % (ISO 3251), einen Wasseranteil von 67 % (DIN 53715, K. Fischer), einen Brechungsindex von 1,409 (DIN 51423, 20 °C), einen pH-Wert von 11 (DIN 19268, 1 % Trockensubstanz in dest. Wasser), eine Dichte von 1,08 g/cm³ (DIN 51757, 20 °C), eine (kationische) Ladungsdichte von 17 meq/g TS, einen Anteil an monomerem Ethylenimin <1 ppm, einen Pourpoint von -5 °C (ISO 3016) sowie ein Verhältnis von primären Aminogruppen/sekundären Aminogruppen/tertiären Aminogruppen (¹³C-NMR) von 1/1/0,7 auf.

Weiterhin kann es sich bei dem Polyethylenimin um ein Polyethylenimin handeln, welches unter der Bezeichnung Lupasol PN 50 kommerziell erhältlich ist. Ein solches Polyethylenimin weist eine mittlere Molmasse von 1.000.000 g/mol (GPC), eine Viskosität von 6.000 mPas (ISO 2555, Brookfield), eine Konzentration von 49 % (ISO 3251), einen Wasseranteil von 51 % (DIN 53715, K. Fischer), einen Brechungsindex von 1,435 (DIN 51423, 20 °C), einen pH-Wert von 8 (DIN 19268, 1 % Trockensubstanz in dest. Wasser), eine Dichte von 1,10 g/cm³ (DIN 51757, 20 °C), eine (kationische) Ladungsdichte von 13 meq/g TS, einen Anteil an monomerem Ethylenimin <1 ppm, einen Pourpoint von -5 °C (ISO 3016) sowie ein Verhältnis von primären Aminogruppen/sekundären Aminogruppen/tertiären Aminogruppen (¹³C-NMR) von 1/1/0,7 auf.

Weiterhin kann es sich bei dem Polyethylenimin um ein Polyethylenimin handeln, welches unter der Bezeichnung Lupasol PN 60 kommerziell erhältlich ist. Ein solches Polyethylenimin weist eine Viskosität von 500 mPas (ISO 2555, Brookfield), eine Konzentration von 40 % (ISO 3251), einen Wasseranteil von 60 % (DIN 53715, K. Fischer), einen Brechungsindex von 1,420 (DIN 51423, 20 °C), einen pH-Wert von 4 (DIN 19268, 1 % Trockensubstanz in dest. Wasser) sowie eine Dichte von 1,14 g/cm³ (DIN 51757, 20 °C) auf.

Weiterhin kann es sich bei dem Polyethylenimin um ein Polyethylenimin handeln, welches unter der Bezeichnung Lupasol SK kommerziell erhältlich ist. Ein solches Polyethylenimin weist eine mittlere Molmasse von 2.000.000 g/mol (GPC), eine Viskosität von 700 mPas (ISO 2555, Brookfield), eine Konzentration von 24 % (ISO 3251), einen Wasseranteil von 76 % (DIN 53715, K. Fischer), einen Brechungsindex von 1,382 (DIN 51423, 20 °C), einen pH-Wert von 7 (DIN 19268, 1 % Trockensubstanz in dest. Wasser), eine Dichte von 1,06 g/cm³ (DIN 51757, 20 °C), eine (kationische) Ladungsdichte von 8 meq/g TS, einen Anteil an monomerem Ethylenimin <1 ppm sowie einen Pourpoint von 0 °C (ISO 3016) auf.

Weiterhin kann es sich bei dem Polyethylenimin um ein Polyethylenimin handeln, welches unter der Bezeichnung Lupasol PO 100 kommerziell erhältlich ist. Ein solches Polyethylenimin weist eine mittlere Molmasse von 5.000 g/mol (GPC), eine Viskosität von 300 mPas (ISO 2555, Brookfield, bei 50 °C), einen Brechungsindex von 1,455 (DIN 51423, 20 °C), einen pH-Wert von 10 (DIN 19268, 1 % Trockensubstanz in dest. Wasser), eine Dichte von 1,00 g/cm³ (DIN 51757, 20 °C), eine (kationische) Ladungsdichte von 8 meq/g TS sowie einen Anteil an monomerem Ethylenimin < 1 ppm auf.

Bevorzugt handelt es sich bei dem Polyethylenimin um ein Polyethylenimin, welches unter der Bezeichnung Lupasol PS kommerziell erhältlich ist. Das unter der Bezeichnung Lupasol PS kommerziell erhältliche Polyethylenimin eignet sich aufgrund seiner mittleren Molmasse in besonderer Weise zur Schaumstabilisierung.

In weiterer Ausgestaltung der Erfindung weist das Polyethylenimin einen Anteil von 0,01 Gew.-% bis 0,5 Gew.-%, insbesondere 0,01 Gew.-% bis 0,2 Gew.-%, vorzugsweise 0,01 Gew.-% bis 0,1 Gew.-%, auf, bezogen auf das Gesamtgewicht der Zusammensetzung.

In weiterer Ausgestaltung der Erfindung enthält die Zusammensetzung ferner ein Feuchthaltemittel. Das Feuchthaltemittel kann insbesondere ausgewählt sein aus der Gruppe bestehend aus 1,2-Propylenglykol, Trimethylenglykol, Dipropylenglykol, Hexylenglykol, 1,4-Dihydroxyhexan, 1,2,6-Hexantriol, 1,2-Octandiol, Sorbitol, Butylenglykol, Methylpropandiol, Triethylenglykol, Glycerin, Polyethylenglykol, Ethoxydiglykol, Polyethylensorbitol und Mischungen von wenigstens zwei der genannten Feuchthaltemittel.

Das Feuchthaltemittel kann einen Anteil von 0,01 Gew.-% bis 1 Gew.-%, insbesondere 0,01 Gew.-% bis 0,2 Gew.-%, vorzugsweise 0,01 Gew.-% bis 0,1 Gew.-%, aufweisen, bezogen auf das Gesamtgewicht der Zusammensetzung.

In weiterer Ausgestaltung der Erfindung enthält die Zusammensetzung ferner einen Rückfetter. Der Rückfetter kann insbesondere ausgewählt sein aus der Gruppe bestehend aus Isoadipat, Sorbitanlaurat, Isopropylmyristat, Isopropylpalmitat, Cetylpalmitat, Cetylstearylacetat Myristylmyristat, (Myristyl Myristate), Isostearylisostearat (Isostearyl Isostearate) und Mischungen von wenigstens zwei der genannten Rückfetter.

Der Rückfetter kann einen Anteil von 0,01 Gew.-% bis 1 Gew.-%, insbesondere 0,05 Gew.-% bis 0,5 Gew.-%, vorzugsweise 0,05 Gew.-% bis 0,15 Gew.-%, aufweisen, bezogen auf das Gesamtgewicht der Zusammensetzung.

In weiterer Ausgestaltung der Erfindung weist die Zusammensetzung ferner einen Hautpflegestoff auf. Der Hautpflegestoff kann insbesondere ausgewählt sein aus der Gruppe bestehend aus Ester aus 2-Ethylhexansäure und Cetylalkohol, Ester aus Ethylhexansäure und Stearylalkohol, einer Mischung aus diesen Estern (Cetearyl Ethylhexanoat), Myristylalkohol, Squalan, Hyaluronsäure, Vitamin E, α-Bisabolol und Mischungen von wenigstens zwei der genannten Hautpflegestoffe.

Der Hautpflegestoff kann einen Anteil von 0,01 Gew.-% bis 1 Gew.-%, insbesondere 0,05 Gew.-% bis 0,5 Gew.-%, vorzugsweise 0,05 Gew.-% bis 0,15 Gew.-%, aufweisen, bezogen auf das Gesamtgewicht der Zusammensetzung.

In weiterer Ausgestaltung der Erfindung enthält die Zusammensetzung ferner einen Filmbildner. Durch die Anwesenheit eines Filmbildners lässt sich die Hautverträglichkeit der erfindungsgemäßen Zusammensetzung zusätzlich verbessern. Insbesondere lassen sich hierdurch Haut und/oder Hände noch wirkungsvoller vor Rissen und Spleißen schützen. Der Filmbildner kann insbesondere ausgewählt sein aus der Gruppe bestehend aus Polyvinylpyrrolidon, Natriumsalze der Polyacrylsäure, Toluolsulfonamid-Formaldehydharz, Nitrocellulose, Sebacinsäuredibutylester, Copolymer aus Steareth-20-Methacrylat und Acrylsäure/Methacrylsäure und deren Estern (kreuzverknüpft mit Pentaerythritol-Allylether; Steareth-20-Methacrylat ist ein Ester der Methacrylsäure mit einem Polyethylenglykol mit durchschnittlich 20 Struktureinheiten -CH₂-CH₂-O- pro Molekül), Copolymer aus Acrylsäure/Methacrylsäure und deren Estern sowie Hydroxyacrylsäureestern, Copolymer aus Methacrylsäure, Ethylacrylat und Methylmethacrylat und Mischungen von wenigstens zwei der genannten Filmbildner.

Der Filmbildner kann einen Anteil von 0,01 Gew.-% bis 1 Gew.-%, insbesondere 0,01 Gew.-% bis 0,1 Gew.-%, vorzugsweise 0,01 Gew.-% bis 0,05 Gew.-%, aufweisen, bezogen auf das Gesamtgewicht der Zusammensetzung.

In weiterer Ausgestaltung der Erfindung enthält die Zusammensetzung ferner einen pH-Regulator. Der pH-Regulator kann insbesondere ausgewählt sein aus der Gruppe bestehend aus Essigsäure, Acetate, Milchsäure, Lactate, Äpfelsäure, Malate, Citronensäure, Citrate, Weinsäure, Tatrate, Adipinsäue, Adipate, Gluconsäure, Gluconate und Mischungen von wenigstens zwei der genannten pH-Regulatoren.

Der pH-Regulator kann einen Anteil von 0,01 Gew.-% bis 1 Gew.-%, insbesondere 0,02 Gew.-% bis 0,1 Gew.-%, vorzugsweise 0,05 Gew.-% bis 0,1 Gew.-%, aufweisen, bezogen auf das Gesamtgewicht der Zusammensetzung.

In weiterer Ausgestaltung der Erfindung enthält die Zusammensetzung ferner ein Vergällungsmittel. Das Vergällungsmittel kann insbesondere ausgewählt sein aus der Gruppe bestehend aus Methylethylketon (Butan-2-on), Methylisopropylketon (3-Methylbutan-2-on), Ethylsecamylketon (5-Methylheptan-3-on) und Mischungen von wenigstens zwei der genannten Vergällungsmittel.

Das Vergällungsmittel kann einen Anteil von 0,1 Gew.-% bis 1 Gew.-%, insbesondere 0,2 Gew.-% bis 0,8 Gew.-%, vorzugsweise 0,4 Gew.-% bis 0,7 Gew.-%, aufweisen, bezogen auf das Gesamtgewicht der Zusammensetzung.

In weiterer Ausgestaltung der Erfindung enthält die Zusammensetzung ferner einen nichtflüchtigen, antimikrobiell wirksamen Stoff. Der Stoff kann insbesondere ausgewählt sein aus der Gruppe bestehend aus Invertseifen wie Kationtenside, quartäre Ammoniumverbindungen wie Benzalkoniumchloride und/oder Benzethoniumchlorid, Biguanidverbindungen wie Chlorhexidin-Salze, Phenolverbindungen, Kresole, Perverbindungen, lodverbindungen wie Povidon-lod, organische Säuren und Mischungen von wenigstens zwei der genannten nichtflüchtigen, antimikrobiell wirksamen Stoffe.

Aufgrund des Alkohols oder der Mischung von Alkoholen wirkt die erfindungsgemäße Zusammensetzung jedoch, wie bereits erwähnt, mit besonderem Vorteil vorzugsweise mikrobizid bzw. antimikrobiell. Der zusätzliche Einsatz eines antimikrobiell wirksamen Stoffes, insbesondere eines nicht flüchtigen antimikrobiell wirksamen Stoffes, ist daher nicht (unbedingt) erforderlich. Deswegen kann die erfindungsgemäße Zusammensetzung neben dem Alkohol oder der Mischung von Alkoholen keinen weiteren mikrobizid bzw. antimikrobiell wirksamen Stoff enthalten. Insbesondere kann die erfindungsgemäße Zusammensetzung frei von einem nichtflüchtigen, antimikrobiell wirksamen Stoff sein.

In weiterer Ausgestaltung der Erfindung enthält die Zusammensetzung ferner Wasser. Das Wasser kann einen Anteil von 0,01 Gew.-% bis 30 Gew.-%, insbesondere 1 Gew.-% bis 25 Gew.-%, vorzugsweise 15 Gew.-% bis 25 Gew.-%, aufweisen, bezogen auf das Gesamtgewicht der Zusammensetzung.

In weiterer Ausgestaltung der Erfindung enthält die Zusammensetzung Folgendes:
- Ethanol und 1-Propanol oder Ethanol und 2-Propanol,
- Silicone Quaternium-22,
- PEG-23M,
- ein Polyethylenimin,
- Wasser und optional
- wenigstens einen Zusatzstoff, welcher ausgewählt ist aus der Gruppe bestehend aus Feuchthaltemittel, Rückfetter, Hautpflegestoff, Filmbildner, pH-Regulator, Vergällungsmittel und Mischungen von wenigstens zwei der genannten Stoffe.

Bezüglich weiterer Merkmale und Vorteile der im Rahmen dieser Ausgestaltung beschriebenen Zusammensetzung wird vollständig auf die im Rahmen der bisherigen Beschreibung gemachten Ausführungen Bezug genommen. Die dort insbesondere in Bezug auf Ethanol, 1-Propanol, 2-Propanol, Silicone Quaternium-22, PEG-23M, Polyethylenimin, Wasser, das Feuchthaltemittel, den Rückfetter, den Hautpflegestoff, den Filmbildner, den pH-Regulator sowie das Vergällungsmittel gemachten Ausführungen gelten sinngemäß.

In weiterer Ausgestaltung der Erfindung enthält die Zusammensetzung Folgendes:
- Ethanol und 1-Propanol oder Ethanol und 2-Propanol,
- Silicone Quaternium-22,
- PEG-23M,
- ein Polyethylenimin,
- ein Feuchthaltemittel,
- einen Rückfetter,
- einen Hautpflegestoff,
- einen Filmbildner,
- einen pH-Regulator,
- ein Vergällungsmittel und
- Wasser.

Bezüglich weiterer Merkmale und Vorteile der im Rahmen dieser Ausgestaltung beschriebenen Zusammensetzung wird ebenfalls vollständig auf die im Rahmen der bisherigen Beschreibung gemachten Ausführungen Bezug genommen. Die dort insbesondere in Bezug auf Ethanol, 1-Propanol, 2-Propanol, Silicone Quaternium-22, PEG-23M, Polyethylenimin, Wasser, das Feuchthaltemittel, den Rückfetter, den Hautpflegestoff, den Filmbildner, den pH-Regulator sowie das Vergällungsmittel gemachten Ausführungen gelten sinngemäß.

In weiterer Ausgestaltung der Erfindung enthält die Zusammensetzung auf 100 Gew.-% Folgendes:
- 45 Gew.-% bis 65 Gew.-% Ethanol,
- 15 Gew.-% bis 25 Gew.-% 1-Propanol und/oder 2-Propanol,
- 0,1 Gew.-% bis 1 Gew.-% Silicone Quaternium-22,
- 0,005 Gew.-% bis 0,5 Gew.-% PEG-23M,
- 0,01 Gew.-% bis 0,5 Gew.-% eines Polyethylenimins,
- 0,01 Gew.-% bis 1 Gew.-% eines Feuchthaltemittels,
- 0,01 Gew.-% bis 1 Gew.-% eines Rückfetters,
- 0,01 Gew.-% bis 1 Gew.-% eines Hautpflegestoffs,
- 0,01 Gew.-% bis 1 Gew.-% eines Filmbildners,
- 0,01 Gew.-% bis 1 Gew.-% eines pH-Regulators,
- 0,1 Gew.-% bis 1 Gew.-% eines Vergällungsmittels und
- 0,01 Gew.-% bis 30 Gew.-% Wasser.

Bezüglich weiterer Merkmale und Vorteile der im Rahmen dieser Ausgestaltung beschriebenen Zusammensetzung wird ebenso vollständig auf die im Rahmen der bisherigen Beschreibung gemachten Ausführungen Bezug genommen. Die dort insbesondere in Bezug auf Ethanol, 1-Propanol, 2-Propanol, Silicone Quaternium-22, PEG-23M, Polyethylenimin, Wasser, das Feuchthaltemittel, den Rückfetter, den Hautpflegestoff, den Filmbildner, den pH-Regulator sowie das Vergällungsmittel gemachten Ausführungen gelten sinngemäß.

In weiterer Ausgestaltung der Erfindung ist die Zusammensetzung, wie bereits erwähnt, frei von Treibmitteln oder Treibgasen. Dadurch ist die erfindungsgemäße Zusammensetzung mit besonderem Vorteil einfacher zu handhaben. Weiterhin ist insbesondere der Einsatz von umweltbedenklichen Treibmitteln, wie beispielsweise fluortensidhaltigen Treibmitteln, oder Treibgasen entbehrlich.

In weiterer Ausgestaltung der Erfindung handelt sich bei der Zusammensetzung um ein Haut- und/oder Händedesinfektionsmittel, bevorzugt um ein Händedesinfektionsmittel. Mit anderen Worten handelt es sich bei der erfindungsgemäßen Zusammensetzung gemäß einer weiteren Ausgestaltung der Erfindung um eine Zusammensetzung zur Anwendung oder Verwendung bei der Desinfektion von Haut und/oder Händen, bevorzugt von Händen.

Schließlich betrifft die vorliegende Erfindung die Verwendung der erfindungsgemäßen Zusammensetzung zur Desinfektion von Haut und/oder Händen, bevorzugt von Händen, d.h. die Verwendung der erfindungsgemäßen Zusammensetzung als Haut- und/oder Händedesinfektionsmittel, bevorzugt als Händedesinfektionsmittel. Bezüglich weiterer Merkmale und Vorteile der erfindungsgemäßen Zusammensetzung wird vollständig auf die bisherige Beschreibung Bezug genommen. Die dort in Bezug auf die erfindungsgemäße Zusammensetzung gemachten Ausführungen gelten sinngemäß auch für diesen Aspekt der Erfindung.

Weitere Merkmale und Vorteile der Erfindung ergeben sich aus der nachfolgenden Beschreibung bevorzugter Ausführungsbeispiele. Dabei können einzelne Merkmale jeweils für sich alleine oder in Kombination miteinander verwirklicht sein. Die beschriebenen Ausführungsbeispiele dienen lediglich der weiteren Erläuterung der Erfindung, ohne diese hierauf zu beschränken.

### BEISPIELTEIL

### 1. Herstellung einer erfindunasaemäßen desinfizierenden Zusammensetzung

Zunächst wurden 55,70 g Ethanol (96% v/v) und 21,00 g Propanol in ein Reaktionsgefäß mit einem Rührwerk vorgelegt. Anschließend erfolgte die Zugabe von 0,557 g Methylethylketon sowie 0,620 g Silicone Quaternium-22. Danach wurden 0,030 g PEG-23M und 0,100 g Cetearyl Ethylhexanoate hinzugegeben. Danach wurden 21,763 g Wasser und 0,015 g Polyethylenimin, 0,035 g Sorbitol, 0,100 g Isopropylmyristat, 0,015 g Polyvinylpyrrolidon sowie 0,065 g Milchsäure hinzugegeben. Die entstandene Reaktionsmischung wurde über einen Zeitraum von 60 Minuten gerührt.

Die so hergestellte Zusammensetzung wies die in nachfolgender Tabelle 1 aufgeführten Komponenten (Bestandteile) auf:

**Tabelle 1: erfindungsgemäße Zusammensetzung mit ihren Komponenten (Bestandteilen)**

| **Komponenten** | **Anteil [Gew.-%]** |
|---|---|
| Ethanol (96% v/v) | 55,70 |
| Propanol | 21,00 |
| Methylethylketon | 0,557 |
| Silicone Quaternium-22 | 0,620 |
| PEG-23M | 0,030 |
| Polyethylenimin | 0,015 |
| Sorbitol | 0,035 |
| Isopropylmyristat | 0,100 |
| Cetearyl Ethylhexanoate | 0,100 |
| Polyvinylpyrrolidon | 0,015 |
| Milchsäure | 0,065 |
| Wasser | 21,763 |

### 2. Herstellung einer weiteren erfindungsgemäßen desinfizierenden Zusammensetzung

Zunächst wurden 53,00 g Ethanol (96% v/v), 21,00 g Propan-1-ol, 2,650 g Propan-2-ol sowie 0,053 g tert-Butanol in ein Reaktionsgefäß mit einem Rührwerk vorgelegt. Anschließend erfolgte die Zugabe von 0,490 g Silicone Quaternium-22. Danach wurden 0,0095 g PEG-23M sowie 0,050 g Myristylalkohol hinzugegeben. Danach wurden 22,5225 g Wasser und 0,075 g Polyethylenimin, 0,050 g Sorbitol, 0,050 g Isoadipat sowie 0,050 g Glycerin hinzugegeben. Anschließend wurde die erhaltene Reaktionsmischung über einen Zeitraum von 60 Minuten gerührt.

Die so hergestellte Zusammensetzung wies die in nachfolgender Tabelle 2 aufgeführten Komponenten (Bestandteile) auf:

**Tabelle 2: weitere erfindungsgemäße Zusammensetzung**

| **Komponenten** | **Anteil [Gew.-%]** |
|---|---|
| Ethanol (96% v/v) | 53,00 |
| Propan-1-ol | 21,00 |
| Propan-2-ol | 2,650 |
| tert-Butanol | 0,053 |
| Silicone Quaternium-22 | 0,490 |
| PEG-23M | 0,0095 |
| Polyethylenimin | 0,075 |
| Sorbitol | 0,050 |
| Isoadipat | 0,050 |
| Glycerin | 0,050 |
| Myristylalkohol | 0,050 |
| Wasser | 22,5225 g |

### 3. Versuche zur Schaumstabilität

Es wurde die Schaummenge sowie die Schaumstabilität der unter 1. hergestellten Zusammensetzung im Vergleich zu dem unter der Bezeichnung Deb Instant FOAM^{®} Complete kommerziell erhältlichen Konkurrenzprodukt sowie im Vergleich zu einer Zusammensetzung, welche kein Polyethylenimin, im Übrigen jedoch die Komponenten der unter 1. hergestellten Zusammensetzung enthielt, getestet. Hierzu wurde zunächst mittels einer Schaumpumpe verglichen, wie viele Hübe notwendig waren, um 50 ml Schaum zu produzieren. Anschließend wurde zeitlich die Abnahme der Schaumhöhe in einen Messzylinder beobachtet.

Es zeigte sich, dass beim Testen der unter 1. hergestellten Zusammensetzung nicht mehr Schaum erzeugt wurde als bei dem Konkurrenzprodukt. Im Vergleich zu dem Konkurrenzprodukt sowie der polyethyleniminfreien Zusammensetzung blieb der Schaum im Falle der unter 1. hergestellten Zusammensetzung jedoch länger stabil.

Die durchgeführten Versuche zeigen, dass es sich bei der erfindungsgemäßen Zusammensetzung um eine schäumende Zusammensetzung handelt, welche insbesondere zur Desinfektion von Händen geeignet ist, wobei sie gegenüber gattungsgemäßen Zusammensetzungen die Vorteile aufweist, dass sie eine reduzierte Klebrigkeit, ein verbessertes Rückstandsverhalten, eine stabilere Schaumerzeugung sowie eine verbesserte Hautverträglichkeit aufweist.

## Patentansprüche

1. Zusammensetzung zur Desinfektion von Haut und/oder Händen, **dadurch gekennzeichnet, dass** die Zusammensetzung Folgendes enthält:
- einen Alkohol oder eine Mischung von Alkoholen,
- eine Silikonverbindung mit quartären Ammoniumgruppen,
- ein Polyethylenoxid und
- ein Polyethylenimin.

2. Zusammensetzung nach Anspruch 1, **dadurch gekennzeichnet, dass** es sich bei dem Alkohol oder der Mischung von Alkoholen um einen Alkohol oder eine Mischung von Alkoholen der allgemeinen Formel
R-OH
handelt, wobei R einen aliphatischen linearen oder aliphatischen verzweigten Kohlenwasserstoffrest mit 1 bis 8 Kohlenstoffatomen, insbesondere 1 bis 6 Kohlenstoffatomen, bedeutet.

3. Zusammensetzung nach Anspruch 1 oder 2, **dadurch gekennzeichnet, dass** der Alkohol oder die Mischung von Alkoholen ausgewählt ist aus der Gruppe bestehend aus Ethanol, 1-Propanol, 2-Propanol und Mischungen von wenigsten zwei der genannten Alkohole.

4. Zusammensetzung nach einem der vorhergehenden Ansprüche, **dadurch gekennzeichnet, dass** es sich bei der Silikonverbindung um eine Silikonverbindung mit wenigstens drei endständigen, quartären Ammoniumgruppen handelt.

5. Zusammensetzung nach einem der vorhergehenden Ansprüche, **dadurch gekennzeichnet, dass** die Silikonverbindung ausgewählt ist aus der Gruppe bestehend aus Silicone Quaternium-1, Silicone Quaternium-2, Silicone Quaternium-3, Silicone Quaternium-4, Silicone Quaternium-5, Silicone Quaternium-6, Silicone Quaternium-7, Silicone Quaternium-8, Silicone Quaternium-9, Silicone Quaternium-10, Silicone Quaternium-11, Silicone Quaternium-12, Silicone Quaternium-15, Silicone Quaternium-16, Silicone Quaternium-17, Silicone Quaternium-18, Silicone Quaternium-20, Silicone Quaternium-21, Silicone Quaternium-22, Silicone Quaternium-2 Panthenol Succinate, Silicone Quaternium-16/Glycidyl Dimethicone Crosspolymer, Quaternium 80 und Mischungen von wenigstens zwei der genannten Silikonverbindungen mit quartären Ammoniumgruppen.

6. Zusammensetzung nach einem der vorhergehenden Ansprüche, **dadurch gekennzeichnet, dass** es sich bei der Silikonverbindung um Silicone Quaternium-22 handelt.

7. Zusammensetzung nach einem der vorhergehenden Ansprüche, **dadurch gekennzeichnet, dass** die Silikonverbindung einen Anteil von 0,1 Gew.-% bis 1 Gew.-%, insbesondere 0,3 Gew.-% bis 0,9 Gew.-%, vorzugsweise 0,4 Gew.-% bis 0,8 Gew.-%, aufweist, bezogen auf das Gesamtgewicht der Zusammensetzung.

8. Zusammensetzung nach einem der vorhergehenden Ansprüche, **dadurch gekennzeichnet, dass** das Polyethylenoxid ausgewählt ist aus der Gruppe bestehend aus PEG-2M, PEG-5M, PEG-7M, PEG-9M, PEG-14M, PEG-20M, PEG-23M, PEG-25M, PEG-45M, PEG-65M, PEG-90M, PEG-115M, PEG-160M, PEG-180M und Mischungen von wenigstens zwei der genannten Polyethylenoxide.

9. Zusammensetzung nach einem der vorhergehenden Ansprüche, **dadurch gekennzeichnet, dass** es sich bei dem Polyethylenoxid um PEG-23M handelt.

10. Zusammensetzung nach einem der vorhergehenden Ansprüche, **dadurch gekennzeichnet, dass** das Polyethylenoxid einen Anteil von 0,005 Gew.-% bis 0,5 Gew.-%, insbesondere 0,008 Gew.-% bis 0,1 Gew.-%, vorzugsweise 0,009 Gew.-% bis 0,05 Gew.-%, aufweist, bezogen auf das Gesamtgewicht der Zusammensetzung.

11. Zusammensetzung nach einem der vorhergehenden Ansprüche, **dadurch gekennzeichnet, dass** es sich bei dem Polyethylenimin um ein verzweigtes Polyethylenimin handelt.

12. Zusammensetzung nach einem der vorhergehenden Ansprüche, **dadurch gekennzeichnet, dass** das Polyethylenimin eine mittlere molare Masse von 800 g/mol bis 2.000.000 g/mol, insbesondere 800 g/mol bis 750.000 g/mol, aufweist.

13. Zusammensetzung nach einem der vorhergehenden Ansprüche, **dadurch gekennzeichnet, dass** das Polyethylenimin einen Anteil von 0,01 Gew.-% bis 0,5 Gew.-%, insbesondere 0.01 Gew.-% bis 0,2 Gew.-%, vorzugsweise 0,01 Gew.-% bis 0,1 Gew.-%, aufweist, bezogen auf das Gesamtgewicht der Zusammensetzung.

14. Zusammensetzung nach einem der vorhergehenden Ansprüche, **dadurch gekennzeichnet, dass** die Zusammensetzung ferner Wasser enthält.

15. Zusammensetzung nach einem der vorhergehenden Ansprüche, **dadurch gekennzeichnet, dass** die Zusammensetzung Folgendes enthält:
- Ethanol und 1-Propanol oder Ethanol und 2-Propanol,
- Silicone Quaternium-22,
- PEG-23M,
- ein Polyethylenimin,
- Wasser und optional
- wenigstens einen Zusatzstoff, welcher ausgewählt ist aus der Gruppe bestehend aus Feuchthaltemittel, Rückfetter, Hautpflegestoff, Filmbildner, pH-Regulator, Vergällungsmittel und Mischungen von wenigstens zwei der genannten Stoffe.

## Claims

1. Composition for disinfecting skin and/or hands, **characterized in that** the composition includes the following:
- an alcohol or a mixture of alcohols,
- a silicone compound having quaternary ammonium groups,
- a polyethylene oxide, and
- a polyethylene imine.

2. Composition according to claim 1, **characterized in that** the alcohol or the mixture of alcohols is an alcohol or a mixture of alcohols of the general formula
R-OH
wherein R represents an aliphatic linear or aliphatic branched hydrocarbon radical having 1 to 8 carbon atoms, in particular 1 to 6 carbon atoms.

3. Composition according to claim 1 or 2, **characterized in that** the alcohol or the mixture of alcohols is selected from the group consisting of ethanol, 1-propanol, 2-propanol and mixtures of at least two of said alcohols.

4. Composition according to any of the preceding claims, **characterized in that** the silicone compound is a silicone compound having at least three terminal, quaternary ammonium groups.

5. Composition according to any of the preceding claims, **characterized in that** the silicone compound is selected from the group consisting of Silicone Quaternium-1, Silicone Quaternium-2, Silicone Quaternium-3, Silicone Quaternium-4, Silicone Quaternium-5, Silicone Quaternium-6, Silicone Quaternium-7, Silicone Quaternium-8, Silicone Quaternium-9, Silicone Quaternium-10, Silicone Quaternium-11, Silicone Quaternium-12, Silicone Quaternium-15, Silicone Quaternium-16, Silicone Quaternium-17, Silicone Quaternium-18, Silicone Quaternium-20, Silicone Quaternium-21, Silicone Quaternium-22, Silicone Quaternium-2 Panthenol Succinate, Silicone Quaternium-16/Glycidyl Dimethicone Crosspolymer, Quaternium 80 and mixtures of at least two of said silicone compounds having quaternary ammonium groups.

6. Composition according to any of the preceding claims, **characterized in that** the silicone compound is Silicone Quaternium-22.

7. Composition according to any of the preceding claims, **characterized in that** the silicone compound has a proportion of 0.1 % by weight to 1 % by weight, in particular 0.3 % by weight to 0.9 % by weight, preferably 0.4 % by weight to 0.8 % by weight, based on the total weight of the composition.

8. Composition according to any of the preceding claims, **characterized in that** the polyethylene oxide is selected from the group consisting of PEG-2M, PEG-5M, PEG-7M, PEG-9M, PEG-14M, PEG-20M, PEG-23M, PEG-25M, PEG-45M, PEG-65M, PEG-90M, PEG-115M, PEG-160M, PEG-180M and mixtures of at least two of said polyethylene oxides.

9. Composition according to any of the preceding claims, **characterized in that** the polyethylene oxide is PEG-23M.

10. Composition according to any of the preceding claims, **characterized in that** the polyethylene oxide has a proportion of 0.005 % by weight to 0.5 % by weight, in particular 0.008 % by weight to 0.1 % by weight, preferably 0.009 % by weight to 0.05 % by weight, based on the total weight of the composition.

11. Composition according to any of the preceding claims, **characterized in that** the polyethylene imine is a branched polyethylene imine.

12. Composition according to any of the preceding claims, **characterized in that** the polyethylene imine has an average molar mass of 800 g/mol to 2,000,000 g/mol, in particular 800 g/mol to 750,000 g/mol.

13. Composition according to any of the preceding claims, **characterized in that** the polyethylene imine has a proportion of 0.01 % by weight to 0.5 % by weight, in particular 0.01 % by weight to 0.2 % by weight, preferably 0.01 % by weight to 0.1 % by weight, based on the total weight of the composition.

14. Composition according to any of the preceding claims, **characterized in that** the composition further includes water.

15. Composition according to any of the preceding claims, **characterized in that** the composition includes the following:
- ethanol and 1-propanol, or ethanol and 2-propanol,
- Silicone Quaternium-22,
- PEG-23M,
- a polyethylene imine,
- water and optionally
- at least one additive which is selected from the group consisting of humectants, refatting agents, skincare products, filming agents, pH regulators, denaturants and mixtures of at least two of said agents.

## Revendications

1. Composition pour la désinfection de la peau et/ou des mains, **caractérisée en ce que** la composition contient les éléments suivants :
- un alcool ou un mélange d'alcools,
- un composé du silicium avec des groupes ammonium quaternaire,
- un poly(oxyde d'éthylène) et
- une polyéthylène-imine.

2. Composition selon la revendication 1, **caractérisée en ce qu'**il s'agit, pour l'alcool ou le mélange d'alcools, d'un alcool ou d'un mélange d'alcools de formule générale
R-OH
dans laquelle R représente un radical hydrocarboné aliphatique linéaire ou aliphatique ramifié comprenant 1 à 8 atomes de carbone, en particulier 1 à 6 atomes de carbone.

3. Composition selon la revendication 1 ou 2, **caractérisée en ce que** l'alcool ou le mélange d'alcools est choisi dans le groupe constitué par l'éthanol, le 1-propanol, le 2-propanol et les mélanges d'au moins deux des alcools mentionnés.

4. Composition selon l'une quelconque des revendications précédentes, **caractérisée en ce qu'**il s'agit, pour le composé du silicium, d'un composé du silicium présentant au moins trois groupes ammonium quaternaire en position terminale.

5. Composition selon l'une quelconque des revendications précédentes, **caractérisée en ce que** le composé du silicium est choisi dans le groupe constitué par le Silicone Quaternium-1, le Silicone Quaternium-2, le Silicone Quaternium-3, le Silicone Quaternium-4, le Silicone Quaternium-5, le Silicone Quaternium-6, le Silicone Quaternium-7, le Silicone Quaternium-8, le Silicone Quaternium-9, le Silicone Quaternium-10, le Silicone Quaternium-11, le Silicone Quaternium-12, le Silicone Quaternium-15, le Silicone Quaternium-16, le Silicone Quaternium-17, le Silicone Quaternium-18, le Silicone Quaternium-20, le Silicone Quaternium-21, le Silicone Quaternium-22, le Silicone Quaternium-2 Panthenol Succinate, le Silicone Quaternium-16/Glycidyl Dimethicone Crosspolymer, le Quaternium 80 et les mélanges d'au moins deux des composés du silicium présentant des groupes ammonium quaternaire mentionnés.

6. Composition selon l'une quelconque des revendications précédentes, **caractérisée en ce qu'**il s'agit, pour le composé du silicium, de Silicone Quaternium-22.

7. Composition selon l'une quelconque des revendications précédentes, **caractérisée en ce que** le composé du silicium représente une proportion de 0,1% en poids à 1% en poids, en particulier de 0,3% en poids à 0,9% en poids, de préférence de 0,4% en poids à 0,8% en poids, par rapport au poids total de la composition.

8. Composition selon l'une quelconque des revendications précédentes, **caractérisée en ce que** le poly(oxyde d'éthylène) est choisi dans le groupe constitué par le PEG-2M, le PEG-5M, le PEG-7M, le PEG-9M, le PEG-14M, le PEG-20M, le PEG-23M, le PEG-25M, le PEG-45M, le PEG-65M, le PEG-90M, le PEG-115M, le PEG-160M, le PEG-180M et les mélanges d'au moins deux des poly(oxydes d'éthylène) mentionnés.

9. Composition selon l'une quelconque des revendications précédentes, **caractérisée en ce qu'**il s'agit, pour le poly(oxyde d'éthylène), de PEG-23M.

10. Composition selon l'une quelconque des revendications précédentes, **caractérisée en ce que** le poly(oxyde d'éthylène) représente une proportion de 0,005% en poids à 0,5% en poids, en particulier de 0,008% en poids à 0,1% en poids, de préférence de 0,009% en poids à 0,05% en poids, par rapport au poids total de la composition.

11. Composition selon l'une quelconque des revendications précédentes, **caractérisée en ce qu'**il s'agit, pour la polyéthylène-imine, d'une polyéthylène-imine ramifiée.

12. Composition selon l'une quelconque des revendications précédentes, **caractérisée en ce que** la polyéthylène-imine présente une masse molaire moyenne de 800 g/mole à 2.000.000 g/mole, en particulier de 800 g/mole à 750.000 g/mole.

13. Composition selon l'une quelconque des revendications précédentes, **caractérisée en ce que** la polyéthylène-imine représente une proportion de 0,01% en poids à 0,5% en poids, en particulier de 0,01% en poids à 0,2% en poids, de préférence de 0,01% en poids à 0,1% en poids, par rapport au poids total de la composition.

14. Composition selon l'une quelconque des revendications précédentes, **caractérisée en ce que** la composition contient en outre de l'eau.

15. Composition selon l'une quelconque des revendications précédentes, **caractérisée en ce que** la composition contient les éléments suivants :
- éthanol et 1-propanol ou éthanol et 2-propanol,
- Silicone Quaternium-22,
- PEG-23M,
- une polyéthylène-imine,
- de l'eau et éventuellement
- au moins un additif qui est choisi dans le groupe constitué par les agents hydratants, les agents relipidants, les agents de soin de la peau, les agents filmogènes, les régulateurs du pH, les dénaturants et les mélanges d'au moins deux des substances mentionnées.
